# EUROPEAN PATENT APPLICATION

(11) **EP 2 034 752 A1**
(43) Date of publication of application: **11.03.2009**
(21) Application number: 07745430.4
(22) Date of filing: 15.06.2007
(51) Int. Cl.: H04Q 7/22, H04Q 7/38

(54) **USER DEVICE, BASE STATION, AND METHOD USED IN MOBILE COMMUNICATION SYSTEM**

(30) Priority: 20.06.2006 JP 2006170701
(71) Applicant: NTT DoCoMo, Inc., Chiyoda-ku Tokyo 100-6150 (JP)
(72) Inventor: UMESH, Anil, Chiyoda-ku, Tokyo 100-6150 (JP); KATO, Yasuhiro, Chiyoda-ku, Tokyo 100-6150 (JP)
(74) Representative: HOFFMANN EITLE
(86) International application number: PCT/JP2007/062176
(87) International publication number: WO 2007/148634

(57) **Abstract**

A user apparatus includes a handover request signal transmission unit configured to transmit a request signal to a source base station for handover to a target base station, a handover command reception unit configured to receive a handover command from the source base station, a PDCP reordering function execution unit configured to execute a PDCP reordering function of determining sequence of packets in a PDCP sublayer and deferring to deliver the packets to an upper layer until the packets become in-sequence, a handover complete signal transmission unit configured to report completion of the handover to the target base station, a PDCP reordering function activation unit configured to activate the PDCP reordering function, and a PDCP reordering function inactivation unit configured to inactivate the PDCP reordering function in response to expiration of a predefined time period or in response to receipt of a notification from the target base station.

## Description

### TECHNICAL FIELD

The present invention relates to the technical field of mobile communication and more particularly relates to user apparatuses, base stations and methods for use in mobile communication systems.

### BACKGROUND ART

In this technical field, research and development on next generation mobile communication systems have been accelerated. In the next generation communication systems as conceived at the filing time of the present application, when a certain user apparatus conducts handover between base stations, packets destined for the user apparatus remaining in the source base station (which may be referred to as unacknowledge packets or remaining packets) are forwarded to the target base station. The target base station receives both packets transmitted from the source base station and packets forwarded from an upper node after route switching and then transmits the packets to the user apparatus over the air. Handover in such mobile communication systems is described in detail in 3GPP, TR25.813, section 9.1.5 "Handover", v1.0.1, 2006-06.

### DISCLOSURE OF INVENTION

### [PROBLEM TO BE SOLVED BY THE INVENTION]

In packet transmission from the target base station to the user apparatus, it is desirable to initiate delivery of packets (new packets) from an upper node after completion of delivering of packets (remaining packets or old packets) from the source base station from the viewpoint of in-sequence reception of these packets at the user apparatus.

Meanwhile, the radio channel conditions may be varying over time, and accordingly the transmission rate achieved in radio links may be variable. Thus, in cases where there are not sufficient radio resources, the new packets are transmitted in serial sequence of the sequence numbers after transmission of the remaining packets as stated above. On the other hand, in cases where there are relatively sufficient radio resources, even if both the new packets and the remaining packets are out-of-sequence, they may be transmitted together in order to make efficient use of the radio resources.

On the other hand, a user apparatus includes a PDCP (Packet Data Convergence Protocol) reordering function to examine the sequence of packets in a PDCP sublayer and defer delivering the packets to an upper layer until the sequence of the packets becomes proper and a RLC (Radio Link Control) reordering function to examine the sequence of packets in a RLC sublayer and defer delivering the packets to the upper layer until the sequence of the packets becomes proper. Out-of-sequence of the packets in a radio link can be overcome by means of the RLC reordering function while the out-of-sequence of the packets as caused by handover cannot be overcome by means of the RLC reordering function. In this case, the PDCP reordering function may be used to correct the disturbed packet sequence that may occur due to a mixture of remaining packets and new packets.

The PDCP reordering function may also attempt to correct non-conformity of the packet sequence that has occurred between a base station and an upper node such as an access gateway as well as in the radio interval. In some cases, however, the non-conformity of the packet sequence between the base station and the upper node may be intentional and normally caused by traffic congestion or other factors. Thus, the non-conformity may not be caused in all cases by some abnormal conditions. If the non-conformity of the packet order has normally occurred, the user apparatus does not have to defer delivering the packets to the upper node until the packets becomes in-sequence. In such a case, the packets should be delivered to the upper node immediately, but the unnecessary deferment may make the delay time longer.

One object of the present invention is to properly adapt the packet waiting time in a user apparatus during handover in a mobile communication system where the reordering functions for the RLC sublayer and the PDCP sublayer are used together.

### [MEANS FOR SOLVING THE PROBLEM]

A user apparatus according to an embodiment of the present invention includes a handover request signal transmission unit configured to transmit a request signal to a source base station for handover to a target base station, a handover command reception unit configured to receive a handover command from the source base station, a PDCP reordering function execution unit configured to execute a PDCP reordering function of determining sequence of packets in a PDCP sublayer and deferring to deliver the packets to an upper layer until the packets become in-sequence, a handover complete signal transmission unit configured to report completion of the handover to the target base station, a PDCP reordering function activation unit configured to activate the PDCP reordering function and a PDCP reordering function inactivation unit configured to inactivate the PDCP reordering function in response to expiration of a predefined time period or in response to receipt of a notification from the target base station.

### [ADVANTAGE OF THE INVENTION]

According to the present invention, it is possible to fulfill the proper packet waiting time in a user apparatus during handover in a mobile communication system where the reordering functions for the RLC sublayer and the PDCP sublayer are used together.

### BRIEF DESCRIPTION OF DRAWINGS

FIG. 1 shows a mobile communication system for use in one embodiment of the present invention;
FIG. 2 is a flowchart of exemplary operations according to one embodiment of the present invention;
FIG. 3A is a functional block diagram illustrated from the viewpoint of a user plane entity of each communication node;
FIG. 3B is another functional block diagram illustrated from the viewpoint of a user plane entity of each communication node;
FIG. 4 shows a case where remaining packets are transmitted in priority according to one embodiment of the present invention;
FIG. 5 schematically shows a temporal variation of the amount of packet data accumulated in a transmission buffer according to the prior art; and
FIG. 6 schematically shows a temporal variation of the amount of packet data accumulated in a transmission buffer according to one embodiment of the present invention.

### LIST OF REFERENCE SYMBOLS

aGW: access gateway
eNodeB: base station
UE: user apparatus

### BEST MODE FOR CARRYING OUT THE INVENTION

Some embodiments of the present invention are described below. Separation of the embodiments is not essential to the present invention and two or more of the embodiments may be used as needed.

### [First Embodiment]

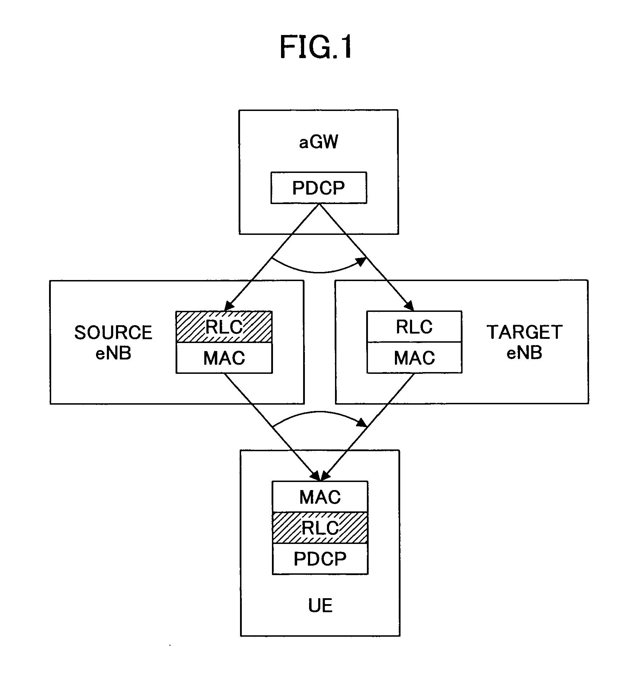

FIG. 1 shows a mobile communication system for use in one embodiment of the present invention. In FIG. 1, an access gateway (aGW), source/target base stations (eNodeB) and a user apparatus (UE) are illustrated. In the illustration, user plane protocols are also illustrated.

In this embodiment, the access gateway (aGW) belongs to a core network, but a full or partial portion of functionality of the access gateway may consist of a radio access network (RAN). In this embodiment, the radio access network is implemented in a base station. The access gateway (aGW) relays data transmission between nodes within the core network and the base stations. The access gateway (aGW) may be referred to as a router. The access gateway includes various functions, and in particular a PDCP sublayer function is important in the present invention. However, the PDCP sublayer function may as well be implemented at the base station (eNB).

The base station (eNodeB) communicates with the user apparatus (UE) over the air and in addition communicates with the access gateway (aGW) over a line. The base station may communicate with other base stations directly or indirectly as needed. The base station may act as a source base station or a target base station in handover depending on a residing cell of the user apparatus. Among various functions of the base station, a RLC sublayer function and a medium access control (MAC) sublayer function particularly play an important role in the present invention.

Among various functions of the user apparatus (UE), a MAC sublayer function, a RLC sublayer function and a PDCP sublayer function particularly play an important role in the present invention. In the illustration, the user apparatus first resides in a cell for the left base station and then conducts handover to a cell for the right base station.

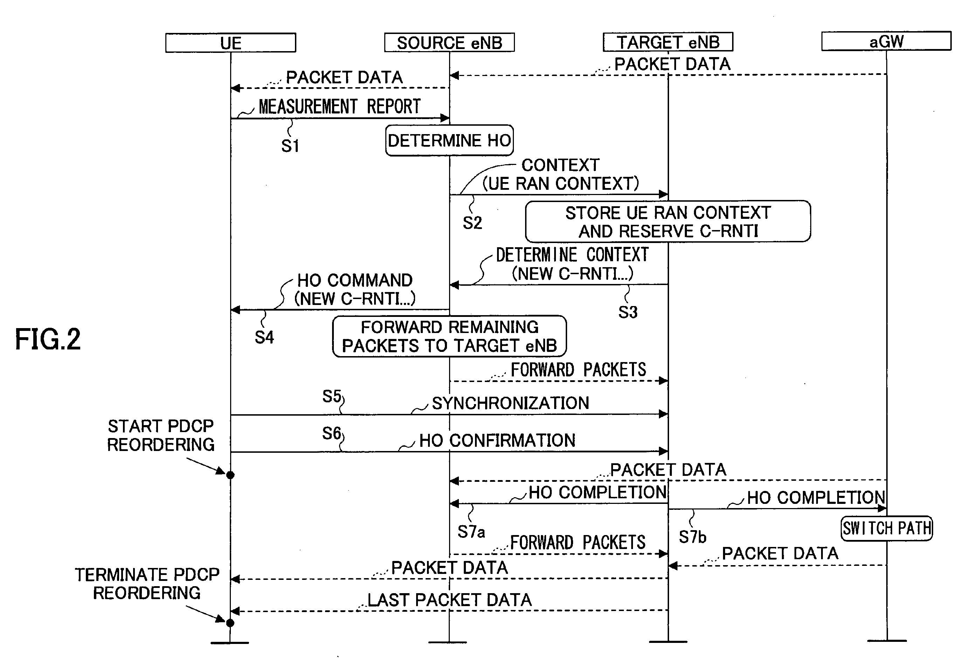

FIG. 2 shows exemplary operations of the above-mentioned components in handover (HO) according to one embodiment of the present invention. First, the user apparatus (UE) receives downlink packet data via the source base station (source eNB). Then, when the a handover event is detected at the user apparatus, at step S1, a measurement report is transmitted to the source base station. The source base station determines to conduct handover depending on the measurement report.

At step S2, context data for the user apparatus of interest is transmitted to the target base station after the determination of handover. The target base station stores the context data for the user apparatus and reserves identification information for the user apparatus. Typically, this identification information is uniquely assigned to a base station to identify the user apparatus within the residing cell of the base station such as C-RNTI (C-Radio Network Temporary Identity).

At step S3, the C-RNTI for the user apparatus is transmitted to the source base station.

At step S4, a handover command together with the transmitted identification information (C-RNTI) is transmitted to the user apparatus. After the transmission of the handover command, the source base station forwards (remaining) packets accumulated in a transmission buffer for the user apparatus to the target base station. The remaining packets may include packets that have never been transmitted to the user apparatus as well as packets that have been transmitted one or more times but unacknowledged, that is, packets whose acknowledgements have not been received. The remaining packets are forwarded along for a necessary time period subsequent to step S4 depending on the data amount and an interface between the base stations.

At step S5, in response to receipt of the handover command, the user apparatus disconnects from the source base station and attempts to synchronize with the target base station.

At step S6, when the user apparatus connects to the target base station after the synchronization is fulfilled, the user apparatus transmits a signal indicative of completion of the handover (handover confirm) to the target base station.

In this embodiment, the user apparatus switches from an inactive operating mode to an active operating mode of the PDCP reordering function after transmission of the handover confirm signal. During wireless communications, the RLC reordering function is always in the active operating mode. Thus, after the handover confirm signal has been transmitted at step S6, both the PDCP reordering function and the RLC reordering function are in the active operating mode.

At steps 7a and 7b, in response to receipt of the handover confirm from the user apparatus, the target base station transmits the handover confirm to the source base station and the access gateway. In response to receipt of the handover confirm, the access gateway switches a transmission channel (path) from the source base station to the target base station. Subsequently, downlink packets are delivered from the access gateway to the target base station and then are transmitted to the user apparatus over radio links. As a result, the target base station receives (remaining) packets from the source base station and (new) packets from the access gateway and transmits the remaining packets or a combination of the remaining packets and the new packets to the user apparatus over the air depending on the radio channel conditions.

If the remaining packets or the new packets are out-of-sequence in the user apparatus, the PDCP reordering function can be used to reorder them. Note that the sequence numbers in the PDCP layer may be inherited from both of the base stations in the handover.

The target base station receives the remaining packets from the source base station and continues transmitting the mixture of the remaining packets and the new packets over the air until all the remaining packets have been transmitted to the user apparatus over the air. When the last packet in the remaining packets is transmitted from the source base station, it is also reported to the user apparatus. Upon receiving the last packet of the remaining packets, the user apparatus makes the operating mode of the PDCP reordering function inactive. Since packets transmitted from the target base station to the user apparatus are always new packets (downlink packets from an upper node) after receipt of the last packet in the remaining packets, the reordering function only has to be exerted for radio section. For this reason, the PDCP reordering function is disabled, and only the RLC reordering function remains enabled. In other words, the PDCP reordering function is active only in time period where a mixture of the remaining packets and the new packets are transmitted over the air and is disabled in the other time periods. Thus, it is possible to avoid unnecessary waiting caused by the reordering in "the other timer periods."

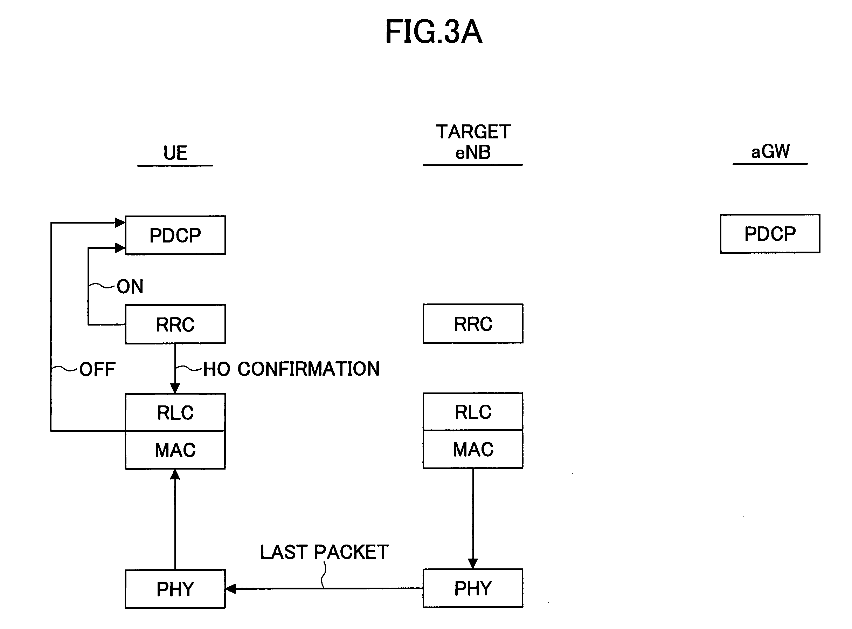

FIG. 3A is a functional block diagram illustrating the different communication nodes from the viewpoint of user plane protocols. The protocol sublayers in FIG. 3A are the same as those in FIG. 1. As described in conjunction with FIG. 2, after transmitting a handover confirm signal (HO confirm) indicative of completion of the handover, the user apparatus enables the PDCP reordering function. From the viewpoint of the protocol sublayers, as illustrated in FIG. 3A, in response to transmission of the HO confirm signal from the RRC sublayer to the RLC sublayer, the PDCP reordering function is enabled. Also, in response to receipt of the last packet from the target base station, the user apparatus disables the PDCP reordering function.

In the above-mentioned embodiment, the end time point of the PDCP reordering function is associated with the time point of radio transmission of the last packet from the source base station, but the PDCP reordering function may be inactivated by a predetermined time period after the start time point of the PDCP reordering function.

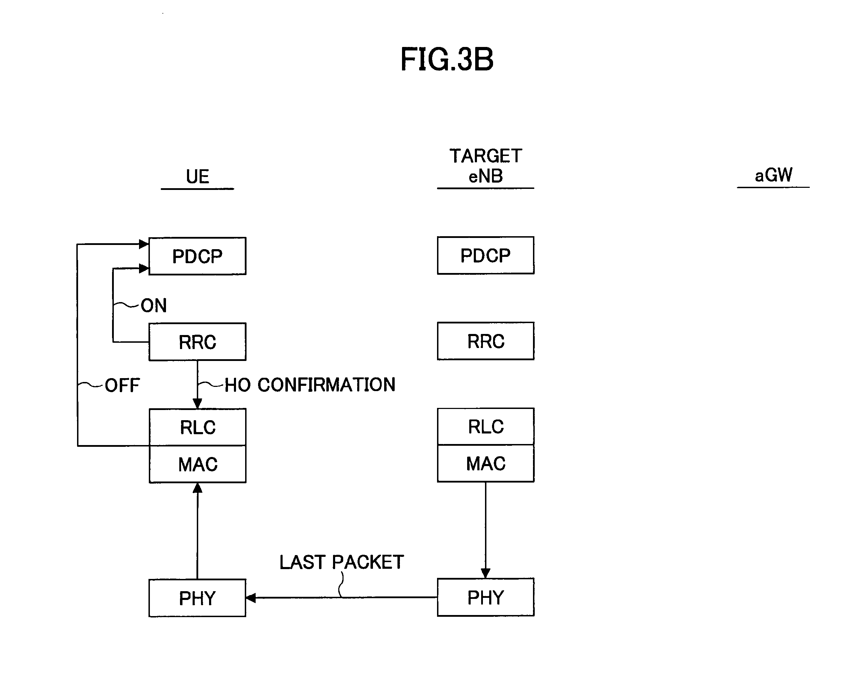

Note that the PDCP reordering function may be terminated in the access gateway (aGW) as illustrated in FIG. 3A or in the base station as illustrated in FIG. 3B.

### [Second Embodiment]

As stated above, remaining packets in a source base station in handover are forwarded to a target base station. The target base station receives the remaining packets in the source base station and new packets transmitted from an upper node after path switching, stores them in a transmission buffer in order of receipt and transmits them in that order to a user apparatus over the air.

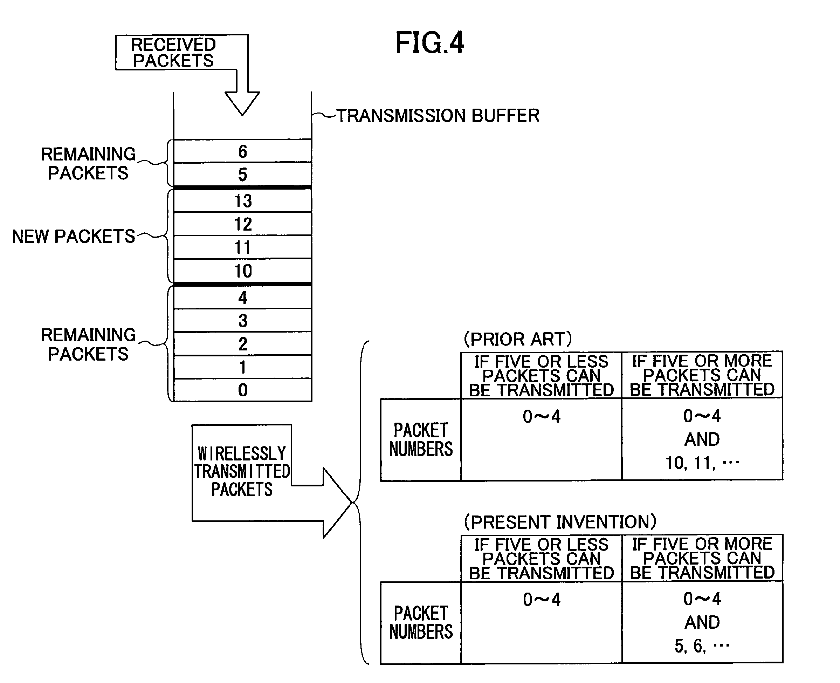

FIG. 4 shows exemplary packets supplied from a transmission buffer of the target base station. For clarity of explanation, the respective numbers of remaining packets are denoted as 0, 1, 2, 3, 4, 5, 6 and the respective numbers of new packets are denoted as 10, 11, 12, 13 in FIG. 4. These packets arrive at the target base station in order of the numbers 0-4, 10-13, 5 and 6 and are stored in the transmission buffer in that arrival order. In a conventional scheme, the packets are output in the arrival order, that is, in First-In First-Out (FIFO) manner. As a result, if five or less packets can be transmitted depending on the radio link condition, one or more of packets with the numbers 0-4 are transmitted over the air. On the other hand, if five or more packets can be transmitted, in addition to the packets with the numbers 0-4, the subsequently arriving packets with the numbers 10, 11, ... are transmitted over the air. For this reason, a mixture of the remaining packets and the new packets may occur in the user apparatus.

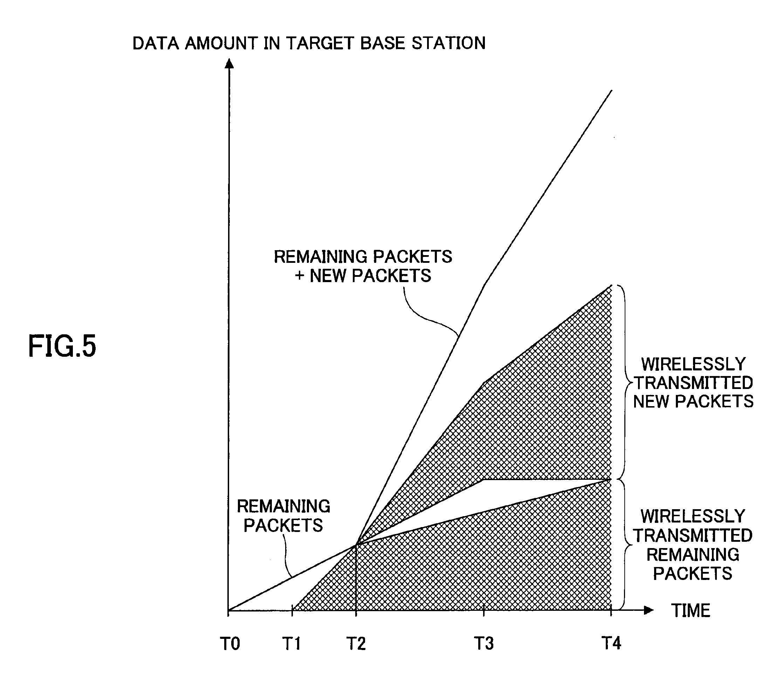

FIG. 5 schematically shows a temporal variation of the amount of data accumulated in the transmission buffer as illustrated in FIG. 4. In the graph, the line "remaining packets" represents the data amount of packets forwarded from a source base station to a target base station between time points T0-T3. The last packet in the remaining packets arrives at the time point T3, and subsequently no new remaining packet is transmitted from the source base station. For this reason, the line "remaining packets" in the graph remains constant after the time point T3. After the time point T2, new packets are delivered from an upper node. In the graph, the line "remaining packets + new packets" represents the total data amount of remaining packets and new packets. For this reason, the data amount drastically increases after the time point T2, and the slope of the line becomes relatively small at the time point T3. This is because the remaining packets remain constant after the time point T3 and only the increase in the new packets contributes the increase in the total data amount of remaining packets and new packets. The hatched area represents the amount of data transmitted from the target base station to the user apparatus over the air. The wireless transmission starts with the time point T1. For clarity of explanation, it is assumed that the radio conditions remain constant and the radio transmission can be fulfilled at a constant data rate. Only the remaining packets are stored in the transmission buffer between the time points T1 and T2 and thus are transmitted over the air. After the time point T2, however, the remaining packets and new packets are transmitted in the arrival order over the air. Thus, earlier arriving remaining packets and new packets arriving subsequent to these remaining packets are transmitted over the air while packets arriving later than these new packets remain in the transmission buffer. Such a condition continues until all remaining packets have been transmitted over the air at the time point T4.

Referring back to FIG. 4, the second embodiment of the present invention is described. In this embodiment, the remaining packets are output from the transmission buffer and transmitted over the air in priority over the new packets. For example, if five or less packets can be transmitted depending on the radio link conditions, one or more of the packets with the numbers 0-4 are transmitted over the air. On the other hand, if five or more packets can be transmitted, in addition to the packets with the numbers 0-4, the packets with the numbers 5, 6, ... are transmitted over the air. In other words, the source base station separates between the remaining packets and the new packets at receipt of the packets and outputs the remaining packets in priority. Although the separation of the remaining packets and the new packets may be carried out in various schemes, according to one scheme, the source base station is provided with a reception port dedicated to the remaining packets and a separate reception port dedicated to the new packets, and the respective port numbers may be used for the separation. The separation of the remaining packets and the new packets and the storage of the packets may be carried out in the RLC sublayer (FIGS. 1, 3A and 3B).

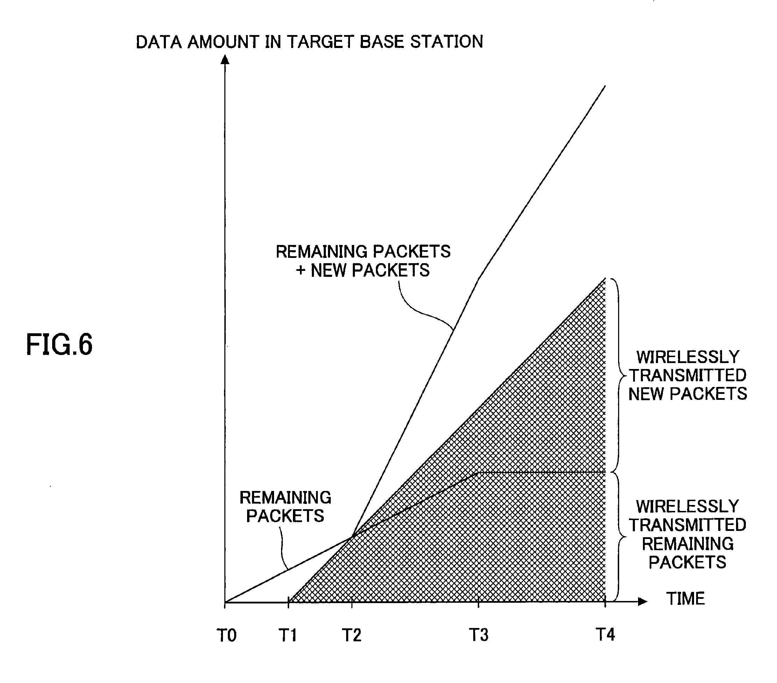

FIG. 6 schematically shows a temporal variation of the amount of data accumulated in the transmission buffer according to this embodiment. The lines "remaining packets" and "remaining packets + new packets" and the time points T0-T4 are the same as the illustration in FIG. 5, and thus duplicative descriptions thereof are omitted. In this embodiment, the remaining packets are transmitted over the air in priority. For this reason, the remaining packets are rapidly transmitted, and the radio transmission of all the remaining packets is completed at the time point T3. This differs from the conventional scheme (FIG. 5) where the radio transmission of the remaining packets is completed at the time point T4 later than the time point T3.

The radio transmission of the remaining packets is completed at earlier timing, and thus the user apparatus can deliver received packets to an upper layer such as an application layer at an earlier timing. In addition, the last packets in the remaining packets can be transmitted to the user apparatus at an earlier timing, and thus the second embodiment achieves earlier completion of the PDCP reordering than the first embodiment. Also, the PDCP reordering function has to be used together in a shorter time period than the first embodiment.

Although the present invention has been described with reference to the certain embodiments, it will be appreciated by those skilled in the art that the embodiments are simply illustrative and that variations, modifications, and alterations may be made to the embodiments. The present invention has been described with reference to specific numerical values to provide a thorough understanding of the present invention, but unless specifically indicated, these numerical values are simply illustrative and any other suitable values may be used. Separation of the distinct embodiments is not essential to the present invention, and two or more of the embodiments may be combined as needed. For convenience, apparatuses according to embodiments of the present invention have been described in functional block diagrams, but the apparatuses may be implemented in hardware, software or combinations thereof. The present invention is not limited to the above embodiments, and variations, modifications and alterations may be made within the sprit of the present invention.

This international patent application is based on Japanese Priority Application No. 2006-170701 filed on June 20, 2006, the entire contents of which are hereby incorporated herein by reference.

## Claims

1. A user apparatus, comprising:
a handover request signal transmission unit configured to transmit a request signal to a source base station for handover to a target base station;
a handover command reception unit configured to receive a handover command from the source base station;
a PDCP reordering function execution unit configured to execute a PDCP reordering function of determining sequence of packets in a PDCP sublayer and deferring to deliver the packets to an upper layer until the packets become in-sequence;
a handover complete signal transmission unit configured to report completion of the handover to the target base station;
a PDCP reordering function activation unit configured to activate the PDCP reordering function; and
a PDCP reordering function inactivation unit configured to inactivate the PDCP reordering function in response to expiration of a predefined time period or in response to receipt of a notification from the target base station.

2. The user apparatus as claimed in claim 1, wherein
the notification from the target base station indicates that a last packet of packets forwarded from the source base station has been transmitted over a radio interface.

3. A method for use in a user apparatus having a PDCP reordering function for determining sequence of packets in a PDCP sublayer and deferring to deliver the packets to an upper layer until the packets become in-sequence, the method comprising the steps of:
transmitting a request signal to a source base station for handover to a target base station;
receiving a handover command from the source base station;
transmitting completion of the handover to the target base station and activating the PDCP reordering function; and
inactivating the PDCP reordering function in response to expiration of a predefined time period or in response to receipt of a notification from the target base station.

4. A base station acting as a target base station in handover between base stations for a user apparatus, comprising:
a handover completion notification reception unit configured to receive a notification indicative of completion of handover from the user apparatus initiating the handover in accordance with a handover command from a source base station; and
a wireless transmission unit configured to transmit packets destined for the user apparatus forwarded from the source base station to the user apparatus over a radio interface in priority over packets destined for the user apparatus delivered from an upper node of the source base station.

5. The base station as claimed in claim 4, wherein
a last packet of the packets destined for the user apparatus forwarded from the source base station is transmitted to the user apparatus together with an indication that the last packet has been forwarded.

6. The base station as claimed in claim 4, wherein
the packets destined for the user apparatus forwarded from the source base station and the packets destined for the user apparatus delivered from an upper node of the source base station are separated from each other with port numbers where the packets have been received.

7. A method for use in a base station acting as a target base station in handover between base stations for a user apparatus, the method comprising the steps of:
receiving a notification indicative of completion of handover from the user apparatus initiating the handover in accordance with a handover command from a source base station; and
transmitting packets destined for the user apparatus forwarded from the source base station to the user apparatus over a radio interface in priority over packets destined for the user apparatus delivered from an upper node of the source base station.

8. A mobile communication system comprising a source base station, a target base station and a user apparatus,
the user apparatus comprising:
a handover request signal transmission unit configured to transmit a request signal to a source base station for handover to a target base station;
a handover command reception unit configured to receive a handover command from the source base station;
a PDCP reordering function execution unit configured to execute a PDCP reordering function of determining sequence of packets in a PDCP sublayer and deferring to deliver the packets to an upper layer until the packets become in-sequence;
a handover complete signal transmission unit configured to report completion of the handover to the target base station;
a PDCP reordering function activation unit configured to activate the PDCP reordering function; and
a PDCP reordering function inactivation unit configured to inactivate the PDCP reordering function in response to expiration of a predefined time period or in response to receipt of a notification from the target base station,
the target base station comprising:
a handover completion notification reception unit configured to receive a notification indicative of completion of handover from the user apparatus initiating the handover in accordance with a handover command from a source base station; and
a wireless transmission unit configured to transmit packets destined for the user apparatus forwarded from the source base station to the user apparatus over a radio interface in priority over packets destined for the user apparatus delivered from an upper node of the source base station.
